# EUROPEAN PATENT APPLICATION

(11) **EP 4 814 691 A1**
(43) Date of publication of application: **30.09.2026**
(21) Application number: 25221427.5
(22) Date of filing: 08.12.2025
(51) Int. Cl.: G06F 3/16

(54) **METHOD FOR ADJUSTING VOLUME OF TERMINAL, APPARATUS, ELECTRONIC DEVICE, AND STORAGE MEDIUM**

(30) Priority: 24.03.2025 CN 202510348061
(71) Applicant: Beijing Zitiao Network Technology Co., Ltd., Beijing 100190 (CN)
(72) Inventor: Dai, Aixin, Beijing, 100028 (CN)
(74) Representative: Grünecker Patent- und Rechtsanwälte PartG mbB

(57) **Abstract**

The present disclosure provides a method for adjusting volume of a terminal, an apparatus, an electronic device, and a storage medium. The method for adjusting the volume of the terminal includes: determining (S11) an audio attribute value of a speech signal in response to the speech signal being detected, and adjusting (S12) volume of content played by the terminal based the audio attribute value, where the played content is determined based on the speech signal. The method realizes automatic volume adjustment in different scenarios, enriches adjustment manners, and reduces the cost of user operation.

## Description

### FIELD

The present disclosure relates to the field of computer technologies, and in particular, to a method for adjusting volume of a terminal, an apparatus, an electronic device, and a storage medium.

### BACKGROUND

The volume magnitude of a terminal such as a mobile phone is usually adjusted using a volume button. In some technologies, the volume is automatically adjusted according to ambient noise to ensure that suitable volume is obtained in different environments.

### SUMMARY

The present disclosure provides a method for adjusting volume of a terminal, an apparatus, an electronic device, and a storage medium.

The present disclosure adopts the following technical solutions.

In some embodiments, the present disclosure provides a method for adjusting volume of a terminal, including:
determining an audio attribute value of a speech signal in response to the speech signal being detected; and
determining volume of a content played by the terminal based on the audio attribute value, where the played content is determined based on the speech signal.

In some embodiments, the present disclosure provides an apparatus for adjusting volume of a terminal, including:
a detecting unit, configured to determine an audio attribute value of a speech signal in response to the speech signal being detected; and
a controlling unit, configured to determine volume of a content played by the terminal based on the audio attribute value, where the played content is determined based on the speech signal.

In some embodiments, the present disclosure provides an electronic device, including: at least one memory and at least one processor,
where the memory is configured to has program codes stored therein, the program codes stored in the at least one memory, when executed by the at least processor to perform the above method.

In some embodiments, the present disclosure provides a computer-readable storage medium having program codes stored therein, where the program codes, when run by a processor, cause the processor to perform the above method.

According to the method provided by the embodiments of the present disclosure, the volume of the terminal is adjusted based on the audio attribute value of the speech signal instead of referring to the ambient sound, which may realize automatic volume adjustment in different scenarios, enrich adjustment manners, and reduce the cost of user operation.

### BRIEF DESCRIPTION OF THE DRAWINGS

The above and other features, advantages, and aspects of the embodiments of the present disclosure will become more apparent in combination with the drawings and with reference to the following the Detailed description section. Throughout the drawings, the same or similar reference numbers refer to the same or similar elements. It should be understood that the drawings are schematic, and the elements and components are not necessarily drawn to scale.
Fig. 1 is a flowchart of a method for adjusting volume of a terminal according to an embodiment of the present disclosure.
Fig. 2 is a flowchart of a method for adjusting volume of a terminal according to an embodiment of the present disclosure.
Fig. 3 is a schematic structural diagram of an electronic device according to an embodiment of the present disclosure.

### DETAILED DESCRIPTION OF EMBODIMENTS

It should be understood that before the use of the technical solutions disclosed in the embodiments of the present disclosure, the user shall be informed of the type, range of use, use scenarios, etc. of personal information involved in the present disclosure in an appropriate manner and the authorization of the user shall be obtained according to relevant laws and regulations.

For example, in response to receiving an active request from a user, prompt information is sent to the user to clearly prompt the user that the requested operation will require access to and use of the user's personal information. In this way, the user may independently choose, based on the prompt information, whether to provide the personal information to software or hardware, such as an electronic device, an application, a server, or a storage medium, that performs the operations of the technical solutions of the present disclosure.

As an optional but non-limiting implementation, in response to receiving the active request from the user, the prompt information may be sent to the user in the form of, for example, a pop-up window, in which the prompt information may be presented in text. Furthermore, the pop-up window may also include a selection control for the user to choose whether to "agree" or "disagree" to provide the personal information to the electronic device.

It should be understood that the above process of notifying and obtaining user authorization is only illustrative and does not limit the implementations of the present disclosure, and other manners that satisfy the relevant laws and regulations may also be applied in the implementations of the present disclosure.

It should be understood that the data involved in the technical solution (including but not limited to the data itself, acquisition or use of the data) should comply with the requirements of corresponding laws, regulations, and related provisions.

The embodiments of the present disclosure will be described in more detail below with reference to the drawings. Although some embodiments of the present disclosure are shown in the drawings, it should be understood that the present disclosure may be implemented in various forms and should not be construed as limited to the embodiments set forth herein. Instead, these embodiments are provided for a more thorough and complete understanding of the present disclosure. It should be understood that the drawings and embodiments of the present disclosure are only used for illustrative purposes and are not used to limit the protection scope of the present disclosure.

It should be understood that various steps described in the method implementations of the present disclosure may be executed sequentially and/or in parallel. Furthermore, the method implementations may include additional steps and/or omit the execution of illustrated steps. The scope of the present disclosure is not limited in this regard.

As used herein, the term "include/comprise" and variations thereof are open-ended inclusions, that is, "include/comprise but not limited to". The term "based on" is "at least partially based on". The term "one embodiment" means "at least one embodiment"; the term "another embodiment" means "at least one another embodiment"; and the term "some embodiments" means "at least some embodiments". Relevant definitions of other terms will be given in the description below.

It should be noted that the concepts such as "first" and "second" mentioned in the present disclosure are only used to distinguish different apparatuses, modules, or units, and are not used to limit the order of functions performed by these apparatuses, modules, or units or interdependence therebetween.

It should be noted that the modification of "one" mentioned in the present disclosure is illustrative rather than restrictive, and those skilled in the art should understand that unless otherwise clearly indicated in the context, it should be understood as "one or more".

The names of messages or information exchanged between multiple apparatuses in implementations of the present disclosure are only for illustrative purposes, and are not intended to limit the scope of these messages or information.

The solutions provided by the embodiments of the present disclosure will be described in detail below with reference to the drawings.

Automatic volume adjustment originates from users' demands for intelligence and personalization of audio devices. In different scenarios, it is expected to be able to adjust the volume automatically with hands freed. In conventional technologies, the volume is often adjusted according to the ambient sound to ensure that a suitable volume can be obtained in different environments. A conventional solution is usually to first collect ambient sound through a microphone, process and analyze the signal, and then adjust the volume based on an analysis result of the ambient sound. For example, the volume of an audio device is usually controlled to increase with the increase of the ambient sound.

In related technologies, the volume of an audio device is usually adjusted based on the ambient sound, but sometimes there is also a demand for volume adjustment when the ambient sound does not change, and it is not expected to specially perform an operation of adjusting the volume. In addition, in the related technologies, the volume of a speech assistant is not adjusted when the volume of the audio device is adjusted, but the user also has a demand for adjusting the volume of the speech assistant.

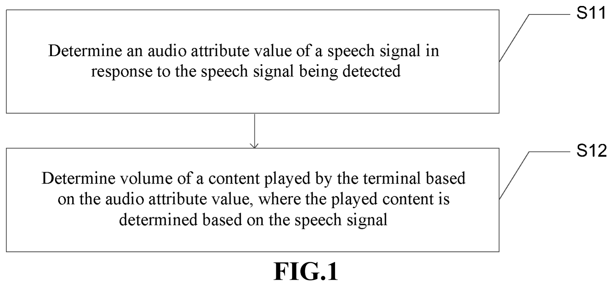

As shown in Fig. 1, Fig. 1 is a flowchart of a method for adjusting volume of a terminal according to an embodiment of the present disclosure, which includes the following steps.

At S11, an audio attribute value of a speech signal is determined in response to detecting the speech signal.

In some embodiments, the method proposed by the present disclosure is applied to a terminal, and the speech signal may be detected by the microphone of the terminal. The speech signal may be uttered by a user. The audio attribute value of an audio attribute of the speech signal is determined after the speech signal is detected. In some embodiments, the audio attribute value is an attribute value of the audio attribute. The audio attribute value may be energy of the speech signal, or may be the energy of the speech signal and a frequency distribution of spectral energy. The energy of the speech signal may be represented by volume magnitude of the speech signal. In some embodiments, the microphone of the terminal is configured to detect the speech signal uttered by the user. In this embodiment, ambient sound (also referred to as ambient noise) is not detected, and the volume is not adjusted based on the ambient sound. After detecting a speech signal uttered by a natural person or detecting audio uttered by a natural person, the speech signal or the audio is compared with pre-stored audio of a user to ensure that the audio is uttered by the user of the terminal. If the audio is uttered by the user of the terminal, it is determined that the speech signal is detected; otherwise, it is determined that no speech signal is detected.

At S12, volume of a content played by the terminal according to the audio attribute value is determined, where the played content is determined according to the speech signal.

In some embodiments, the volume of the played content of the terminal is adjusted based on the detected audio attribute value. For example, the volume of the terminal may be set to change with the changing in the magnitude of the audio attribute value. After obtaining the speech signal, the terminal will respond to a content of the speech signal, that is, the played content will be uttered in a form of speech. In some embodiments, the played content is determined based on the content of the speech signal, and the played content may be an answer to the content of the speech signal. For example, the speech signal may be "What's the weather today", and the played content may be today's specific weather conditions. In this embodiment, there is no need to first specially send an indication to adjust the volume magnitude, that is, the speech signal is not a speech indication such as "increasing the volume" or "decreasing the volume", but a speech signal sent by the user in a normal process of using the terminal, such as a signal to control turning on or turning off functions of the terminal. The terminal may automatically adjust the volume of the played content of the terminal based on the audio attribute value of the speech signal without an additional operation to adjust the volume magnitude. It should be noted that at step S12, only the volume magnitude of the played content may be determined, and other volume magnitude of the terminal may remain unchanged, for example, volumes such as a prompt tone and a song volume magnitude of the terminal may remain unchanged. In some embodiments, only the volume of the played content for replying to the speech signal this time changes with the audio attribute value, and other volumes of the terminal are not affected. In some embodiments, if the user sends a speech signal next time, the volume of the played content next time is also adjusted based on an audio attribute value of the speech signal next time.

In some embodiments of the present disclosure, there is no need to refer to the ambient sound, instead, the volume magnitude is adjusted based on a detection result of the speech signal uttered by the user. In the case where the speech signal is detected, the volume of the played content of the terminal is adjusted based on the attribute value of the audio attribute. For example, the volume magnitude of the played content may be set to be directly proportional to the volume magnitude of the speech signal. If the detected volume of the speech signal is relatively large or relatively small, the volume of the played content may be automatically increased or decreased. In this embodiment, without relying on the ambient sound and without the need to specially perform an operation of adjusting the volume, the volume of the terminal is adjusted based on the audio attribute value of the speech signal, which may realize automatic volume adjustment in different scenarios, enrich adjustment manners, and reduce the cost of user operation. Specifically, if the user is an elderly person with hearing loss, the user utters a speech signal at a relatively large volume to turn on a certain function. The terminal turns on the function based on the speech signal and generates the played content "The function is turned on". The volume at which the terminal utters the played content is proportional to the volume of the speech signal. Because the volume of the speech signal is relatively large, the volume of the played content is also relatively large, thereby matching the audio attribute value of the user's speech signal.

In some embodiments of the present disclosure, before determining the volume of the played content of the terminal based on the audio attribute value, the method further includes: detecting a motion sensor signal; and the determining the volume of the played content of the terminal based on the audio attribute value includes: determining the volume of the played content of the terminal based on the audio attribute value and a detection result of the motion sensor signal.

In some embodiments, the terminal is a device with a microphone, such as a mobile phone, a tablet computer, a bracelet, etc. The motion sensor signal is a signal detected by a motion sensor. The terminal has a motion sensor, and the motion sensor will detect the motion sensor signal when the terminal is moved. The motion sensor may include one or both of an inertial measurement unit and a gyro sensor. In order to avoid misrecognition, a threshold may be set, and only when a value of the motion sensor signal is greater than the threshold, the detected motion sensor signal is considered valid; otherwise, the motion sensor signal is invalid. When the motion sensor signal is invalid, it is equivalent to that no motion sensor signal is detected. When determining the volume of the played content, the motion sensor signal may be considered. For example, the motion sensor signal may represent an action, and an amplitude for adjusting the volume of the played content may be determined based on the action represented by the motion sensor signal. For example, whether to increase or decrease the volume of the played content may be determined based on the audio attribute value, and a percentage of increase or decrease is determined based on the motion sensor signal. In this way, the two are combined to determine the volume of the played content. In some other embodiments of the present disclosure, the volume of the played content of the terminal may be determined according to a pre-trained model, an input of the model includes the motion sensor signal and the audio attribute value of the speech signal, an output of the model is the volume of the played content, and the model may be a neural network model.

In some embodiments of the present disclosure, an audio attribute corresponding to the audio attribute value, which is used to determine the volume of the played content of the terminal when a motion sensor signal representing a preset action is detected, is at least partially different from an audio attribute corresponding to the audio attribute value, which is used to determine the volume of the played content of the terminal when no motion sensor signal representing the preset action is detected. In some embodiments, the detection result of the motion sensor may include: no motion sensor signal representing the preset action is detected (including no motion sensor signal is detected, and a motion sensor signal is detected but the motion sensor signal does not represent the preset action), and the motion sensor signal representing the preset action is detected. The audio attribute of the speech signal may include multiple types, and it may be determined which audio attribute values of the audio attributes are used to determine the volume of the played content according to the detection result of the motion sensor signal. For example, the audio attribute value includes energy of the speech signal and a frequency distribution of spectral energy. When the motion sensor signal representing the preset action is detected, the volume of the played content may be determined according to the energy of the speech signal and the frequency distribution of the spectral energy of the speech signal. When no motion sensor signal representing the preset action is detected, the volume of the played content may be determined only based on the energy of the speech signal.

In some embodiments, when the motion sensor signal is detected, the action represented by the motion sensor signal may be determined, and when the motion sensor signal represents the preset action, a target audio attribute value of a preset type of the speech signal is obtained from the determined audio attribute value. Specifically, when the motion sensor signal is detected, the motion sensor signal may be parsed to determine the action it represents, for example, whether the motion sensor signal represents that the user is walking, running, or picking up the terminal. The preset action may be, for example, lifting the terminal. For example, if the terminal is a bracelet, the preset action may be lifting the bracelet. The target audio attribute value obtained when the motion sensor signal representing the preset action is detected is different from the target audio attribute value obtained when no motion sensor signal representing the preset action is detected, that is, the two are not exactly the same or completely different. For example, when the speech signal and the motion sensor signal representing the preset action are detected, the obtained target audio attribute values may be the frequency distribution of the spectral energy and the energy of the speech signal, and when no motion sensor signal is detected or the motion sensor signal is detected but it is not the motion sensor signal representing the preset action, the obtained target audio attribute value may only be the energy of the speech signal. Corresponding part or all of the audio attribute values are obtained from the determined audio attribute values as the target audio attribute value according to whether the motion sensor signal is detected, and then the volume of the played content is determined based on the target audio attribute value.

In some embodiments of the present disclosure, determining the volume of the played content of the terminal based on the audio attribute value and the detection result of the motion sensor signal includes: in response to the motion sensor signal representing the preset action being determined, adjusting the volume of the played content of the terminal according to a frequency distribution of spectral energy of the speech signal.

In some embodiments, in the case where both the speech signal uttered by the user and the motion sensor signal representing the preset action are detected, the obtained audio attribute value may include: frequency distribution of spectral energy (of the speech signal). In some embodiments, a frequency domain feature and a time domain feature of the speech signal may be determined using a fast Fourier transform, thereby determining a frequency range in which the spectral energy is distributed. In the case where the frequency distributions of the spectral energy of the speech signal are different, the volume of the played content may be set in different manners. In this embodiment, the frequency distribution of the speech signal is considered, so that the volume of the played content of the terminal may be adjusted by controlling the frequency. Adjust the volume of the played content of the terminal by changing the frequency of the uttered speech signal enriches adjustment manners and reduces user operations.

In some embodiments of the present disclosure, determining the volume of the played content of the terminal based on the frequency distribution of the spectral energy of the speech signal includes: in response to frequencies of the spectral energy of the speech signal being all within a first range, reducing the volume of the played content of the terminal; or in response to a frequency of the spectral energy of the speech signal being within a second range, adjusting the volume of the played content of the terminal based on energy of the speech signal; where the frequencies in the second range are greater than the frequencies in the first range.

In some embodiments, the first range is less than a first preset frequency, and the first preset frequency may be 200 Hz, that is, the first range may be less than 200 Hz. In some embodiments, the second range is from a second preset frequency to a third preset frequency, for example, the second range may be from 200 Hz to 800 Hz. In some embodiments, if the frequency of the spectral energy of the speech signal is distributed in the first range, the speech signal is a low-frequency signal at this time. It indicating that the user lowers the voice to speak, and the environment is a scenario that is not suitable for making a loud sound. Therefore, the volume of the played content of the terminal is reduced, specifically to a preset volume, and the preset volume may be a relatively small volume. When the frequency of the spectral energy of the speech signal is distributed in the second range, it indicates that the user is in a normal speaking state. At this time, the volume of the played content of the terminal is adjusted based on specific conditions. Specifically, the volume may be controlled to increase with the increase of the energy of the speech signal, that is, the higher the energy of the speech signal uttered by the user, the higher the volume of the played content of the terminal, and the lower the energy of the speech signal uttered by the user, the lower the volume of the played content of the terminal, so that the volume of the played content of the terminal is adapted to the volume of the speech signal uttered by the user. On the other hand, the energy of the speech signal uttered by the user is not only related to the ambient sound, but also related to the scenario where the user is located (the scenario is, for example, a meeting, a demonstration, and a park). The energy of the speech signal uttered by the user is usually considered to be more appropriate in the current environment and scenario. Sometimes, although the environment is relatively quiet, a louder sound needs to be made, and sometimes, although the environment is relatively noisy, a smaller sound also needs to be made. The energy magnitude of the speech signal uttered by the user is often a combination of considerations of the environment and the scenario. Therefore, adjusting the volume of the played content of the terminal based on the energy of the speech signal may better meet the needs of the user.

In some embodiments of the present disclosure, determining the volume of the played content of the terminal based on the audio attribute and the detection result of the motion sensor signal includes: in response to no motion sensor signal representing the preset action being detected, determining the volume of the played content of the terminal based on the energy of the speech signal.

In some embodiments, if no motion sensor signal is detected or the detected motion sensor signal does not represent a preset action (the preset action is, for example, raising a hand), it indicates that the user may not perform a specific gesture action to adjust the volume of the played content of the terminal. At this time, the volume of the played content of the terminal may be adjusted based on the energy of the speech signal (the energy of the speech signal is positively correlated with the volume magnitude of the speech signal). The higher the energy of the speech signal uttered by the user, the higher the volume of the played content of the terminal, and the lower the energy of the speech signal uttered by the user, the lower the volume of the played content of the terminal, so that the volume of the played content of the terminal is adapted to the environment and the scenario.

In some embodiments of the present disclosure, the method further includes: in response to no speech signal being detected, refrain from adjusting the volume of the played content of the terminal. In some embodiments, when no speech signal uttered by the user is detected, it indicates that the user has no need to use the speech function at this time, and therefore each volume of the terminal is not adjusted for the time being, and the volume is adjusted only in the scenario where the user's speech signal is detected, instead of adjusting the volume because a motion sensor signal is detected. This may avoid adjustment of the volume inappropriate to the scenario. For example, in an environment that needs to be kept quiet, a motion sensor signal of a preset action may be detected because of a daily action of the user, but at this time, if the volume is adjusted rashly, it may cause the volume to be too large. This may cause embarrassment due to a louder sound of the terminal when it is used by the user next time.

In some embodiments of the present disclosure, determining the volume of the played content of the terminal based on the audio attribute value includes: determining volume of a preset application of the terminal based on the audio attribute value. In some embodiments, the played content may be content uttered by the preset application, and the volume of the played content may be adjusted by adjusting the volume of the preset application. After the volume of the played content is determined, the volume of the preset application is also determined accordingly. For example, if the volume of the played content is increased or decreased, the volume of the preset application is correspondingly increased or decreased. The volume of the preset application is adjusted to a determined volume. In some embodiments, the preset application may be a speech assistant of the terminal. In some embodiments, the speech assistant is usually not linked to the system volume of the terminal, and the volume of the speech assistant is usually adjusted through a specific path, which makes the adjustment more complicated. The above problem is considered in this embodiment, and therefore, when adjusting the volume of the played content, the volume of the speech assistant may be adjusted. After the volume of the speech assistant is adjusted, the played content is uttered based on the adjusted volume of the speech assistant. After that, if the speech assistant needs to utter speech, it utters speech based on the volume determined this time until the next time the volume of the speech assistant is adjusted.

In some embodiments of the present disclosure, content of the speech signal is not used for adjusting the volume of the terminal. In some embodiments, the speech signal uttered by the user is not a speech signal specifically used to adjust the volume, that is, it is not an instruction to adjust the volume, or does not include keywords for adjusting the volume, etc. For example, the content of the speech signal is not "increasing the volume", "decreasing the volume" or similar content, and the content of the speech signal is usually other content. For example, the speech signal uttered by the user is "What's the weather today" and "View the calendar", rather than content such as "adjust the volume magnitude ". In this embodiment, there is no need for the user to specially send a speech signal for adjusting the volume magnitude, which reduces user operations.

In some embodiments, the played content is determined based on the content of the speech signal. In some embodiments, the played content may be an answer to the content of the speech signal. For example, the speech signal may be a certain question, and the content of the played content may be an answer to the question. Alternatively, the speech signal may be an instruction to execute a certain function, and the played content may be an execution result of executing the function. The user may obtain the feedback of the terminal to the speech signal by uttering the speech signal, which may improve user experience, and the user may adjust the played content in a natural process of controlling the terminal.

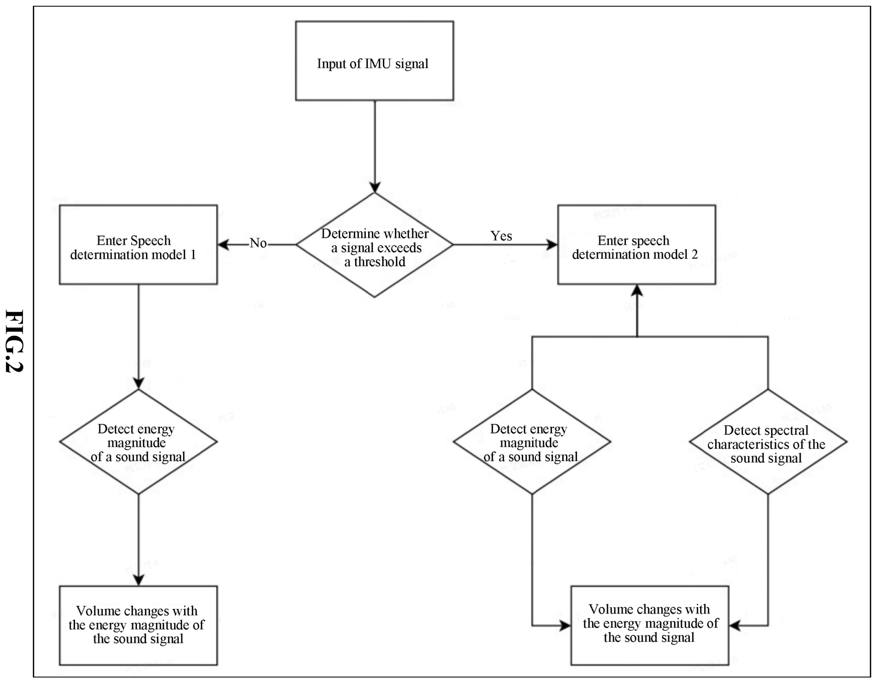

In order to better illustrate the method provided by the present disclosure, a specific embodiment is listed below. As shown in Fig. 2, an inertial measurement unit (IMU) is used as a motion sensor. After the IMU detects a motion sensor signal, it will determine whether the motion sensor signal exceeds a threshold, that is, whether it is a valid motion sensor signal. If it is a valid motion sensor signal, it is determined based on the signal whether an action corresponding to it is a preset action. If the corresponding action is not the preset action, a speech determination model 1 is called to detect a speech signal uttered by the user. If there is no speech signal uttered by the user, the volume of the played content of the terminal is not adjusted. If the speech signal uttered by the user is detected, the energy magnitude of the speech signal (sound signal) is detected, and the volume of the speech assistant is controlled to increase with the increase of the energy of the speech signal. If the action corresponding to the motion sensor signal is the preset action, a speech determination model 2 is called to detect the speech signal uttered by the user. If there is no speech signal uttered by the user, the volume of the played content of the terminal is not adjusted. If the speech signal uttered by the user is detected, a fast Fourier transform is performed on the speech signal to determine a time domain feature and a frequency domain feature of a waveform. If the spectral energy is only concentrated below 200 Hz, the volume of the speech assistant is controlled to be low. If the spectral energy is distributed in a range from 200 Hz to 800 Hz, the volume magnitude of the speech assistant is adjusted based on the energy of the input speech signal. In this embodiment, by combining the IMU data and the speech signal, the volume magnitude may be automatically adjusted to adapt to the current scenario when the user performs the preset action (raising a hand, etc.), thereby reducing user operations.

In some embodiments, the present disclosure provides an apparatus for adjusting volume of a terminal, including:
a detecting unit, configured to determine an audio attribute value of a speech signal in response to the speech signal being detected; and
a controlling unit, configured to determine volume of a content played by the terminal based on the audio attribute value, where the played content is determined based on the speech signal.

In some embodiments, the method further includes: before determining the volume of the played content of the terminal based on the audio attribute value, detecting a motion sensor signal; and determining the volume of the played content of the terminal based on the audio attribute value includes: determining the volume of the played content of the terminal based on the audio attribute value and a detection result of the motion sensor signal.

In some embodiments, an audio attribute corresponding to the audio attribute value, which is used to determine the volume of the played content of the terminal when a motion sensor signal representing a preset action is detected, is at least partially different from an audio attribute corresponding to the audio attribute value, which is used to determine the volume of the played content of the terminal when no motion sensor signal representing the preset action is detected.

In some embodiments, determining the volume of the played content of the terminal based on the audio attribute value and the detection result of the motion sensor signal includes: in response to the motion sensor signal representing the preset action being detected, determining the volume of the played content of the terminal based on a frequency distribution of spectral energy of the speech signal.

In some embodiments, determining the volume of the played content of the terminal based on the frequency distribution of the spectral energy of the speech signal includes:
in response to frequencies of the spectral energy of the speech signal all being within a first range, reducing the volume of the played content of the terminal; or in response to a frequency of the spectral energy of the speech signal being within a second range, determining the volume of the played content of the terminal based on energy of the speech signal; where the frequencies in the second range are greater than the frequencies in the first range.

In some embodiments, the first range is less than a first preset frequency; and/or,
the second range is from a second preset frequency to a third preset frequency.

In some embodiments, determining the volume of the played content of the terminal based on the audio attribute value and the detection result of the motion sensor signal includes:
in response to no motion sensor signal representing the preset action being detected, determining the volume of the played content of the terminal based on the energy of the speech signal.

In some embodiments, the controlling unit is further configured to: in response to no speech signal being detected, refrain from adjusting the volume of the played content of the terminal.

In some embodiments, content of the speech signal is not used for adjusting the volume of the terminal.

In some embodiments, determining the volume of the played content of the terminal based on the audio attribute value includes: determining the volume of a preset application of the terminal based on the audio attribute value.

In some embodiments, the preset application is a speech assistant of the terminal.

In some embodiments, the played content is determined based on the content of the speech signal.

In some embodiments, the audio attribute value is energy of the speech signal, or the audio attribute value is energy of the speech signal and a frequency distribution of spectral energy.

For the embodiments of the apparatuses, since they basically correspond to the method embodiments, reference may be made to the partial descriptions of the method embodiments for relevant parts. The apparatus embodiments described above are only schematic, and the modules described as separate modules may or may not be physically separated. Some or all of the modules may be selected according to actual needs to realize the purposes of the solutions of the embodiments. Those of ordinary skill in the art may understand and implement without paying creative efforts.

The methods and apparatuses of the present disclosure are illustrated above based on the embodiments and application examples. In addition, the present disclosure further provides an electronic device and a computer-readable storage medium, which are described below.

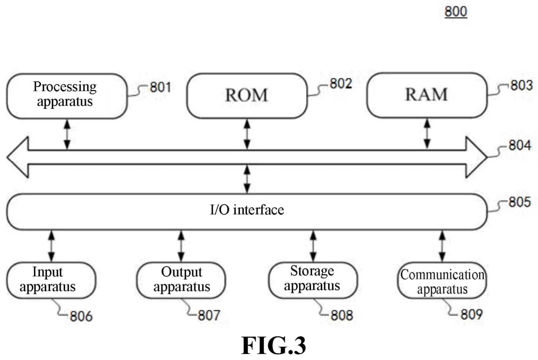

Reference is made to Fig. 3 below, which illustrates a schematic structural diagram of an electronic device (such as a terminal device or a server) 800 suitable for implementing the embodiments of the present disclosure. The terminal device in the embodiments of the present disclosure may include, but is not limited to, a mobile terminal such as a mobile phone, a notebook computer, a digital broadcast receiver, a PDA (personal digital assistant), a PAD (tablet computer), a PMP (portable multimedia player), an in-vehicle terminal (such as an in-vehicle navigation terminal), etc., and a fixed terminal such as a digital TV, a desktop computer, etc. The electronic device shown in the figure is only an example, and should not impose any limitation on the function and use scope of the embodiments of the present disclosure.

The electronic device 800 may include a processing apparatus (such as a central processing unit, a graphics processor, etc.) 801, which may perform various appropriate actions and processing according to a program stored in a read-only memory (ROM) 802 or a program loaded from a storage apparatus 808 into a random access memory (RAM) 803. In the RAM 803, various programs and data required for operations of the electronic device 800 are also stored therein. The processing apparatus 801, the ROM 802, and the RAM 803 are connected to each other through a bus 804. An input/output (I/O) interface 805 is also connected to the bus 804.

Generally, the following apparatuses may be connected to the I/O interface 805: an input apparatus 806 including, for example, a touch screen, a touchpad, a keyboard, a mouse, a camera, a microphone, an accelerometer, a gyroscope, etc.; an output apparatus 807 including, for example, a liquid crystal display (LCD), a speaker, a vibrator, etc.; the storage apparatus 808 including, for example, a magnetic tape, a hard disk, etc.; and a communication apparatus 809. The communication apparatus 809 may allow the electronic device 800 to perform wireless or wired communication with other devices to exchange data. Although the electronic device 800 with various apparatuses is shown in the figure, it should be understood that it is not required to implement or have all of the illustrated apparatuses. More or fewer apparatuses may be implemented or provided alternatively.

In particular, according to the embodiments of the present disclosure, the process described above with reference to the flowchart may be implemented as a computer software program. For example, the embodiments of the present disclosure include a computer program product, which includes a computer program carried on a computer-readable medium, where the computer program contains program codes for performing the method shown in the flowchart. In such an embodiment, the computer program may be downloaded and installed from a network through the communication apparatus 809, or installed from the storage apparatus 808, or installed from the ROM 802. When the computer program is executed by the processing apparatus 801, the aforementioned functions defined in the method of the embodiments of the present disclosure are executed.

It should be noted that the aforementioned computer-readable medium in the present disclosure may be a computer-readable signal medium, a computer-readable storage medium, or any combination thereof. The computer-readable storage medium may be, for example, but not limited to, an electronic, magnetic, optical, electromagnetic, infrared, or semiconductor system, apparatus, device, or any combination thereof. More specific examples of the computer-readable storage medium may include, but are not limited to: an electrical connection based on one or more wires, a portable computer disk with, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, a computer-readable storage medium may be any tangible medium that contains or stores a program, which may be used by or in combination with an instruction execution system, apparatus, or device. In the present disclosure, a computer-readable signal medium may include a data signal propagated on a baseband or as a part of a carrier, and computer-readable program codes are carried therein. This propagated data signal may adopt multiple forms, including but not limited to an electromagnetic signal, an optical signal, or any suitable combination thereof. The computer-readable signal medium may also be any computer-readable medium other than the computer-readable storage medium, and the computer-readable signal medium may send, propagate, or transmit the program used by or in combination with the instruction execution system, apparatus, or device. The program codes contained on the computer-readable medium may be transmitted by any suitable medium, including but not limited to: a wire, an optical cable, an RF (radio frequency), etc., or any suitable combination thereof.

In some implementations, clients and servers may communicate using any currently known or future developed network protocol, such as the HTTP (HyperText Transfer Protocol), and may be interconnected with any form or medium of digital data communication (for example, a communication network). Examples of the communication network include a local area network ("LAN"), a wide area network ("WAN"), an internet (for example, the Internet), a peer-to-peer network (for example, an Ad-Hoc network), and any network currently known or to be developed in the future.

The above computer-readable medium may be contained in the above electronic device or may independently exist alone without being assembled into the electronic device.

The above computer-readable medium carries one or more programs which, when executed by the electronic device, cause the electronic device to perform the method of the present disclosure described above.

The computer program codes for performing the operations of the present disclosure may be written in one or more programming languages or a combination thereof. The above programming languages include object-oriented programming languages such as Java, Smalltalk, and C++, and may further include conventional procedural programming languages such as "C" language or similar programming languages. The program codes may be executed entirely on a user's computer, partly on the user's computer, as a stand-alone software package, partly on the user's computer and partly on a remote computer, or entirely on the remote computer or server. In the case of involving the remote computer, the remote computer may be connected to the user's computer through any kind of network, including a local area network (LAN) or a wide area network (WAN), or may be connected to an external computer (for example, connected by using Internet provided by an Internet service provider).

The flowcharts and block diagrams in the drawings illustrate the possibly implemented architectures, functions, and operations of the system, the method, and the computer program product according to various embodiments of the present disclosure. In this regard, each block in the flowchart or block diagram may represent a module, program segment, or part of code, which contains one or more executable instructions for implementing specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The involved units described in the embodiments of the present disclosure may be implemented by software or by hardware. Among them, the name of a unit does not constitute a limitation on the unit itself under certain circumstances.

The functions described above herein may be performed at least in part by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above. More specific examples of the machine-readable storage medium would include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

According to one or more embodiments of the present disclosure, a method for adjusting volume of a terminal is provided, including:
determining an audio attribute value of a speech signal in response to the speech signal being detected; and
determining volume of a content played by the terminal based on the audio attribute value, where the played content is determined based on the speech signal.

According to one or more embodiments of the present disclosure, a method for adjusting volume of a terminal is provided, where before the determining the volume of the played content of the terminal based on the audio attribute value, the method further includes: detecting a motion sensor signal; and
determining the volume of the played content of the terminal based on the audio attribute value includes:
determining the volume of the played content of the terminal based on the audio attribute value and a detection result of the motion sensor signal.

According to one or more embodiments of the present disclosure, a method for adjusting volume of a terminal is provided, where an audio attribute corresponding to the audio attribute value, which is used to determine the volume of the played content of the terminal when a motion sensor signal representing a preset action is detected, is at least partially different from an audio attribute corresponding to the audio attribute value, which is used to determine the volume of the played content of the terminal when no motion sensor signal representing the preset action is detected.

According to one or more embodiments of the present disclosure, a method for adjusting volume of a terminal is provided, where determining the volume of the played content of the terminal based on the audio attribute value and the detection result of the motion sensor signal includes:
in response to the motion sensor signal representing the preset action being detected, determining the volume of the played content of the terminal based on a frequency distribution of spectral energy of the speech signal.

According to one or more embodiments of the present disclosure, a method for adjusting volume of a terminal is provided, where determining the volume of the played content of the terminal based on the frequency distribution of the spectral energy of the speech signal includes:
in response to frequencies of the spectral energy of the speech signal all being within a first range, reducing the volume of the played content of the terminal;
   or,
in response to a frequency of the spectral energy of the speech signal being within a second range, determining the volume of the played content of the terminal based on energy of the speech signal;
where the frequencies in the second range are greater than the frequencies in the first range.

According to one or more embodiments of the present disclosure, a method for adjusting volume of a terminal is provided, where the first range is less than a first preset frequency; and/or,
the second range is from a second preset frequency to a third preset frequency.

According to one or more embodiments of the present disclosure, a method for adjusting volume of a terminal is provided, where determining the volume of the played content of the terminal based on the audio attribute value and the detection result of the motion sensor signal includes:
in response to no motion sensor signal representing the preset action being detected, determining the volume of the played content of the terminal based on the energy of the speech signal.

According to one or more embodiments of the present disclosure, a method for adjusting volume of a terminal is provided, further including:
in response to no speech signal being detected, refrain from adjusting the volume of the played content of the terminal.

According to one or more embodiments of the present disclosure, a method for adjusting volume of a terminal is provided, where content of the speech signal is not used for adjusting the volume of the terminal.

According to one or more embodiments of the present disclosure, a method for adjusting volume of a terminal is provided, where determining the volume of played content of the terminal based on the audio attribute value includes: determining the volume of a preset application of the terminal based on the audio attribute value.

According to one or more embodiments of the present disclosure, a method for adjusting volume of a terminal is provided, where the preset application is a speech assistant of the terminal.

According to one or more embodiments of the present disclosure, a method for adjusting volume of a terminal is provided, where the played content is determined based on the content of the speech signal.

According to one or more embodiments of the present disclosure, a method for adjusting volume of a terminal is provided, where the audio attribute value is energy of the speech signal, or the audio attribute value is energy of the speech signal and a frequency distribution of spectral energy.

According to one or more embodiments of the present disclosure, an apparatus for adjusting volume of a terminal is provided, including:
a detecting unit, configured to determine an audio attribute value of a speech signal in response to the speech signal being detected; and
a controlling unit, configured to determine volume of a content played by the terminal based on the audio attribute value, where the played content is determined based on the speech signal.

According to one or more embodiments of the present disclosure, an electronic device is provided, including: at least one memory and at least one processor,
where the at least one memory has store program codes stored therein, and the at least one processor is configured to run the program codes stored in the at least one memory to perform the method according to any of the above.

According to one or more embodiments of the present disclosure, a computer-readable storage medium is provided. The computer-readable storage medium is configured to store program codes which, when run by a processor, cause the processor to perform the method according to the above.

The above description is merely illustration of the preferred embodiments of the present disclosure and the technical principles employed. Those skilled in the art should understand that the scope of disclosure involved in the present disclosure is not limited to the technical solutions formed by the specific combinations of the above technical features, and should also cover, other technical solutions formed by any combination of the above technical features or their equivalent features. For example, a technical solution formed by replacing the above features with technical features with similar functions as the above features and disclosed in the present disclosure (but not limited thereto) also falls within the scope of the present disclosure.

Furthermore, although the various operations are depicted in a particular order, it should not be understood as requiring these operations to be performed in the particular order shown or in a sequential order. Under certain circumstances, multitasking and parallel processing may be advantageous. Likewise, although several specific implementation details are included in the above discussion, these should not be construed as limitations on the scope of the present disclosure. Certain features that are described in the context of separate embodiments may also be implemented in combination in a single embodiment. Conversely, various features described in the context of a single embodiment may also be implemented in multiple embodiments separately or in any suitable sub-combination.

Although the subject matter has been described in language specific to structural features and/or logical actions of the methods, it should be understood that the subject matter defined in the appended claims is not necessarily limited to the specific features or actions described above. Conversely, the specific features and actions described above are merely exemplary forms of implementing the claims.

## Claims

1. A method for adjusting volume of a terminal, comprising:
determining (S11) an audio attribute value of a speech signal in response to the speech signal being detected; and
determining (S12) volume of a content played by the terminal based on the audio attribute value, wherein the played content is determined based on the speech signal.

2. The method of claim 1, wherein the method further comprises:
before determining the volume of the played content of the terminal based on the audio attribute value, detecting a motion sensor signal; and
wherein determining the volume of the played content of the terminal based on the audio attribute value comprises: determining the volume of the played content of the terminal based on the audio attribute value and a detection result of the motion sensor signal.

3. The method of claim 1 or 2, wherein
an audio attribute corresponding to the audio attribute value, which is used to determine the volume of the played content of the terminal when a motion sensor signal representing a preset action is detected, is at least partially different from an audio attribute corresponding to the audio attribute value, which is used to determine the volume of the played content of the terminal when no motion sensor signal representing the preset action is detected.

4. The method of claim 2, wherein determining the volume of the played content of the terminal based on the audio attribute value and the detection result of the motion sensor signal comprises:
in response to the motion sensor signal representing the preset action being determined, determining the volume of the played content of the terminal based on a frequency distribution of spectral energy of the speech signal.

5. The method of claim 4, wherein determining the volume of the played content of the terminal based on the frequency distribution of the spectral energy of the speech signal comprises:
in response to frequencies of the spectral energy of the speech signal all being within a first range, reducing the volume of the played content of the terminal; or
in response to a frequency of the spectral energy of the speech signal being within a second range, determining the volume of the played content of the terminal based on energy of the speech signal;
wherein frequencies in the second range are greater than frequencies in the first range.

6. The method of claim 5, wherein
the first range is less than a first preset frequency; and/or,
the second range is from a second preset frequency to a third preset frequency.

7. The method of claim 2, wherein
determining the volume of the played content of the terminal based on the audio attribute value and the detection result of the motion sensor signal comprises:
in response to no motion sensor signal representing the preset action being detected, determining the volume of the played content of the terminal based on energy of the speech signal.

8. The method of claim 1, further comprising:
in response to no speech signal being detected, refrain from adjusting the volume of the played content of the terminal.

9. The method of claim 1, wherein
content of the speech signal is not used for adjusting the volume of the terminal.

10. The method of claim 1, wherein determining the volume of the played content of the terminal based on the audio attribute value comprises: determining volume of a preset application of the terminal based on the audio attribute value.

11. The method of claim 10, wherein
the preset application is a speech assistant of the terminal.

12. The method of claim 1, wherein the played content is determined based on content of the speech signal.

13. The method of claim 1, wherein the audio attribute value is energy of the speech signal, or the audio attribute value is energy of the speech signal and a frequency distribution of spectral energy.

14. An electronic device (800), comprising:
at least one memory (802, 803, 808) and at least one processor (801),
wherein the at least one memory (802, 803, 808) has program codes stored therein, the program codes stored in the at least one memory (802, 803, 808), when executed by the at least one processor (801) to perform the method of any of claims 1 to 13.

15. A non-transitory computer-readable storage medium having program codes stored therein, wherein the program codes, when run by a processor, cause the processor to perform the method of any of claims 1 to 13.
